(19) Europäisches Patentamt
European Patent Office
Office européen des brevets

(11) **EP 3 631 647 B1**

(12) **FASCICULE DE BREVET EUROPEEN**

(45) Date de publication et mention
de la délivrance du brevet:
**24.01.2024 Bulletin 2024/04**

(21) Numéro de dépôt: **18728593.7**

(22) Date de dépôt: **29.05.2018**

(51) Classification Internationale des Brevets (IPC):
**G06F 17/10** $^{(2006.01)}$ **G06F 3/046** $^{(2006.01)}$

(52) Classification Coopérative des Brevets (CPC):
**G06F 17/10; G06F 3/04182; G06F 3/046**

(86) Numéro de dépôt international:
**PCT/EP2018/063981**

(87) Numéro de publication internationale:
**WO 2018/219889 (06.12.2018 Gazette 2018/49)**

(54) **PROCEDE D'ESTIMATION DE LA POSITION D'UN AIMANT COMPORTANT UNE PHASE D'IDENTIFICATION D'UN PERTURBATEUR MAGNETIQUE**

VERFAHREN ZUR SCHÄTZUNG DER POSITION EINES MAGNETEN MIT EINER PHASE ZUR IDENTIFIZIERUNG EINER MAGNETISCHEN STÖRUNG

METHOD FOR ESTIMATING THE POSITION OF A MAGNET COMPRISING A PHASE FOR IDENTIFYING A MAGNETIC DISTURBANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2017 FR 1754806**

(43) Date de publication de la demande:
**08.04.2020 Bulletin 2020/15**

(73) Titulaire: **Advanced Magnetic Interaction, AMI**
**38170 Seyssinet-Pariset (FR)**

(72) Inventeurs:
• **DUPRE LA TOUR, Jean-Marie**
**38240 Meylan (FR)**
• **HAUTSON, Tristan**
**38600 Fontaine (FR)**

(74) Mandataire: **Peterreins Schley**
**Patent- und Rechtsanwälte PartG mbB**
**Hermann-Sack-Straße 3**
**80331 München (DE)**

(56) Documents cités:
EP-A1- 2 884 372        WO-A1-2014/135421
WO-A1-2017/060644       WO-A2-2013/144342
FR-A1- 3 029 642

**Description**

**DOMAINE TECHNIQUE**

L'invention porte sur un procédé d'estimation de la position d'un aimant par rapport à un réseau de magnétomètres comportant une phase d'identification d'un perturbateur magnétique situé au voisinage du réseau de magnétomètres.

**ÉTAT DE LA TECHNIQUE ANTÉRIEURE**

Il est connu d'utiliser au moins un aimant dans le cadre d'un système de relevé de la trace d'un crayon magnétique sur un support d'écriture. L'aimant est ici un objet auquel est associé un moment magnétique non nul, par exemple un aimant permanent fixé à un crayon non magnétique.

A titre d'exemple, le document WO2014/053526 décrit un système de relevé de la trace d'un crayon auquel est fixé un aimant annulaire. L'aimant permanent comporte un matériau magnétique, par exemple ferromagnétique ou ferrimagnétique, uniformément réparti autour d'un axe mécanique qui coïncide avec l'axe longitudinal du crayon.

Le relevé de la trace du crayon est assuré par un dispositif de suivi de l'aimant qui comporte un réseau de magnétomètres, chaque magnétomètre étant apte à mesurer le champ magnétique. Un procédé de suivi de l'aimant estime la position de l'aimant à chaque instant de mesure à l'aide d'un estimateur récursif de type filtre de Kalman. WO2017060644A1 fait partie de l'art antérieur.

Cependant, un perturbateur magnétique peut se situer au voisinage du dispositif de suivi de l'aimant. Il est alors susceptible de provoquer une dégradation du suivi de l'aimant.

**EXPOSÉ DE L'INVENTION**

L'invention a pour objectif de remédier au moins en partie aux inconvénients de l'art antérieur, et plus particulièrement de proposer un procédé d'estimation d'une position de l'aimant, celui-ci étant destiné à être déplacé par rapport à un réseau de magnétomètres, comportant une phase d'identification d'un perturbateur magnétique. L'objet de l'invention est un procédé d'estimation de la position de l'aimant par un dispositif de suivi comportant un réseau de magnétomètres aptes à mesurer un champ magnétique, le procédé étant mis en oeuvre par un processeur, comportant les phases suivantes :

- détermination d'un vecteur d'état dit initial associé à l'aimant, pour un instant de mesure initial, le vecteur d'état comportant des variables représentatives de la position de l'aimant par rapport au réseau de magnétomètres ;
- mesure par le réseau de magnétomètres d'un champ magnétique dit utile, à un instant de mesure, en présence de l'aimant ;
- estimation d'un champ magnétique généré par l'aimant, en fonction du vecteur d'état obtenu à un instant de mesure précédent, sur la base d'un modèle prédéterminé exprimant une relation entre le champ magnétique généré par l'aimant et le vecteur d'état de l'aimant ;
- calcul d'un biais par différence entre ledit champ magnétique estimé et ledit champ magnétique utile mesuré ;
- mise à jour du vecteur d'état en fonction du biais calculé, permettant ainsi d'obtenir une position estimée de l'aimant à l'instant de mesure ;
- réitération des phases de mesure, d'estimation, de calcul du biais et de mise à jour, sur la base du vecteur d'état mis à jour, en incrémentant l'instant de mesure.

Selon l'invention, le procédé comprend en outre la phase suivante :

- identification, à au moins un instant de mesure, d'un perturbateur magnétique distinct de l'aimant et situé au voisinage du réseau de magnétomètres, comportant les étapes suivantes :

  - calcul d'un paramètre dit indicateur à partir d'un paramètre d'écart défini en fonction d'une différence entre un champ magnétique dit estimé généré par l'aimant pour le vecteur d'état obtenu à l'instant de mesure précédent ou le vecteur d'état mis à jour, sur la base dudit modèle prédéterminé, et ledit champ magnétique utile mesuré à l'instant de mesure ;
  - comparaison de l'indicateur à une valeur seuil prédéterminée, et identification du perturbateur magnétique lorsqu'au moins l'une des valeurs de l'indicateur est supérieure ou égale à la valeur seuil.

La phase d'identification peut être effectuée à chaque instant de mesure ou pour quelques-uns des instants de mesure. L'instant de mesure précédent peut être l'instant de mesure à l'incrément précédent ou, pour le premier incrément de temps, à l'instant de mesure initial.

Certains aspects préférés mais non limitatifs de ce procédé sont les suivants.

L'indicateur peut être égal au rapport du paramètre d'écart sur un terme dénominateur comportant au moins le champ magnétique estimé de l'indicateur, le champ magnétique utile mesuré de l'indicateur, ou au moins une constante prédéterminée représentative d'un biais d'au moins l'un desdits magnétomètres.

Le terme dénominateur peut comporter le champ magnétique estimé dudit l'indicateur et ladite constante prédéterminée.

Les phases d'estimation, de calcul du biais et de mise à jour peuvent être effectuées par un algorithme d'estimation récursive bayésienne.

La phase d'estimation peut comporter :

- une étape d'obtention d'un vecteur d'état dit prédit à l'instant de mesure en fonction d'un vecteur d'état obtenu à un instant de mesure précédent, et

- une étape de calcul du champ magnétique estimé pour le vecteur d'état prédit, et la phase de calcul du biais peut comporter :

  - une étape de calcul du biais, dit innovation, comme différence entre le champ magnétique estimé pour le vecteur d'état prédit et ledit champ magnétique utile mesuré.

Le paramètre d'écart peut être égal à l'innovation.

Le paramètre d'écart peut être égal à la différence entre un champ magnétique estimé généré par l'aimant pour le vecteur d'état mis à jour, et ledit champ magnétique utile mesuré à l'instant de mesure.

Les phases d'estimation, de calcul du biais et de mis à jour peuvent être effectuées par un algorithme d'optimisation par minimisation itérative du biais, dit fonction de coût, à l'instant de mesure.

Le vecteur d'état peut comporter en outre des variables représentatives d'un moment magnétique de l'aimant.

La phase d'identification du perturbateur magnétique peut comporter une étape d'émission d'un signal à l'utilisateur invitant à écarter le perturbateur magnétique vis-à-vis du réseau de magnétomètres, tant qu'au moins l'une des valeurs de l'indicateur est supérieure ou égale à la valeur seuil prédéterminée.

L'invention porte également sur un support d'enregistrement d'informations, comportant des instructions pour la mise en oeuvre du procédé selon l'une quelconque des caractéristiques précédentes, ces instructions étant aptes à être exécutées par un processeur.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1 est une vue schématique en perspective d'un dispositif de suivi d'un aimant comportant un réseau de magnétomètres selon un mode de réalisation, au voisinage duquel est situé un perturbateur magnétique ;

la figure 2 est un organigramme d'un exemple de procédé d'estimation d'une position de l'aimant ;

la figure 3 est un organigramme d'un procédé d'estimation d'une position de l'aimant selon un premier mode de réalisation dans lequel l'estimateur est un filtre bayésien, comportant une phase d'identification du perturbateur magnétique ;

la figure 4 est un organigramme illustrant un exemple de phase d'identification du perturbateur magnétique ;

les figures 5A et 5B sont des vues schématiques en coupe (fig.sA) et de dessus (fig.sB) d'un réseau de magnétomètres au voisinage duquel est situé un perturbateur magnétique

les figures 6A et 6B illustrent respectivement une partie d'un organigramme d'un procédé d'estimation d'une position de l'aimant selon une variante du premier mode de réalisation, et la phase d'identification du perturbateur magnétique ;

les figures 7 et 8 illustrent respectivement un organigramme d'un procédé d'estimation d'une position de l'aimant selon un deuxième mode de réalisation dans lequel l'estimateur est un algorithme d'optimisation par minimisation d'une fonction de coût, et la phase d'identification du perturbateur magnétique.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur un procédé d'estimation de la position d'un aimant par rapport à un réseau de magnétomètres d'un dispositif de suivi d'aimant, comportant une phase d'identification d'un perturbateur magnétique situé au voisinage du réseau de magnétomètres.

L'aimant comporte un matériau présentant une aimantation, par exemple rémanente, pour lequel on définit un moment magnétique. L'aimant peut être un aimant permanent cylindrique, par exemple annulaire, tel qu'illustré dans le document WO2014/053526 cité précédemment. Il peut également s'agir d'un ustensile ou d'un crayon équipé d'un tel aimant ou comportant un aimant permanent différent, par exemple intégré au corps du crayon. Le terme crayon est à comprendre au sens large et peut englober les stylos, feutres, pinceaux ou tout autre organe d'écriture ou de dessin.

Le matériau magnétique est de préférence ferrimagnétique ou ferromagnétique. Il présente un moment magnétique spontané non nul même en l'absence d'un champ magnétique extérieur. Il peut présenter un champ magnétique coercitif supérieur à 100 A.m$^{-1}$ ou 500 A.m$^{-1}$ et l'intensité du moment magnétique est de préférence supérieure à 0,01 A.m$^2$ voire à 0,1 A.m$^2$. On considère par la suite que l'aimant permanent peut être approximé par un dipôle magnétique, mais peut l'être par d'autres modèles. L'axe magnétique de l'objet est défini comme étant l'axe colinéaire au moment magnétique de l'objet.

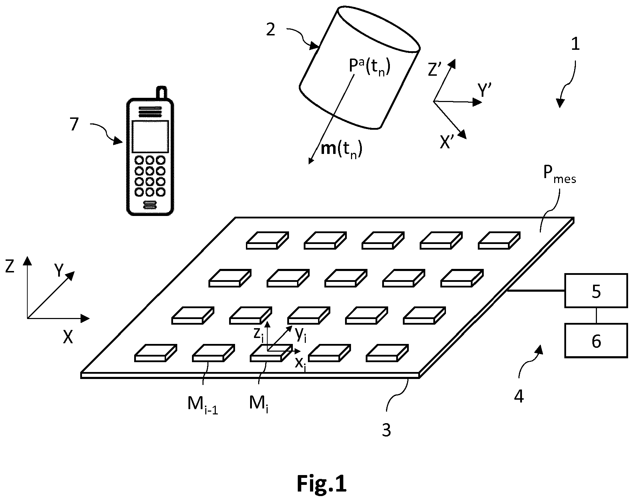

La figure 1 est une vue en perspective, schématique et partielle, d'un dispositif de suivi d'un aimant 2 selon un mode de réalisation. L'aimant 2 est ici un aimant permanent cylindrique, par exemple annulaire, qui est destiné à être fixé à un crayon (non représenté).

Le dispositif de suivi 1 est apte à mesure le champ magnétique émis par l'aimant 2, à différents instants de mesure, au cours d'une durée T de suivi, dans un repère XYZ, et à estimer la position et le moment magnétique de l'aimant 2 sur la base des valeurs mesurées du champ magnétique. En d'autres termes, le dispositif de suivi 1 permet de déterminer la position et l'orientation de l'aimant permanent 2 à différents instants dans le repère XYZ. Comme décrit plus loin, le dispositif de suivi 1 permet en outre d'identifier un perturbateur magnétique 7, distinct de l'aimant 2 à suivre, situé au voisinage du réseau de magnétomètres, c'est-à-dire d'au moins en déterminer la présence au voisinage du réseau de magnétomètres.

On définit ici et pour la suite de la description un repère direct tridimensionnel (X,Y,Z), où les axes X et Y forment un plan parallèle au plan de mesure du réseau de magnétomètres, et où l'axe Z est orienté de manière sensiblement orthogonale au plan de mesure. Dans la suite de la description, les termes « vertical » et « verticalement » s'étendent comme étant relatifs à une orientation sensiblement parallèle à l'axe Z, et les termes « horizontal » et « horizontalement » comme étant relatifs à une orientation sensiblement parallèle au plan (X,Y). Par ailleurs, les termes « inférieur » et « supérieur » s'étendent comme étant relatifs à un positionnement croissant lorsqu'on s'éloigne du plan de mesure suivant la direction +Z.

La position $P_a$ de l'aimant 2 correspond aux coordonnées du centre géométrique de l'aimant 2, c'est-à-dire au barycentre non pondéré de l'ensemble des points de l'aimant 2. Ainsi, le moment magnétique m de l'aimant présente les composantes ($m_x$, $m_y$, $m_z$) dans le repère XYZ. Sa norme, également appelée intensité ou amplitude, est notée $\|m\|$ ou m.

Le dispositif de suivi 1 comporte un réseau de magnétomètres $M_i$ répartis les uns vis-à-vis des autres de manière à former un plan de mesure $P_{mes}$. Le nombre de magnétomètres $M_i$ peut être, par exemple supérieur ou égal à 2, de préférence supérieur ou égal à 16, par exemple égal à 32, notamment lorsqu'il s'agit de magnétomètres triaxes. Le réseau de magnétomètres comporte cependant au moins trois axes de mesure distants les uns des autres et non parallèles deux à deux.

Les magnétomètres $M_i$ sont fixés à une plaque de protection 3 et peuvent être situés au niveau de la face arrière de la plaque, celle-ci étant réalisée dans un matériau non magnétique. Par fixés, on entend qu'ils sont assemblés à la plaque sans aucun degré de liberté. Ils sont ici alignés en lignes et colonnes, mais peuvent être positionnés mutuellement de manière sensiblement aléatoire. Les distances entre chaque magnétomètre et ses voisins, et en particulier les positions relatives des magnétomètres, sont connues et constantes dans le temps. Par exemple, elles peuvent être comprises entre 1cm et 4cm.

Les magnétomètres $M_i$ présentent chacun au moins un axe de mesure, par exemple trois axes, notés $x_i$, $y_i$, $z_i$. Chaque magnétomètre mesure donc l'amplitude et la direction du champ magnétique B perturbé par l'aimant permanent.

Plus précisément, chaque magnétomètre $M_i$ mesure la norme de la projection orthogonale du champ magnétique B suivant les axes $x_i$, $y_i$, $z_i$ du magnétomètre. Un paramètre de calibration des magnétomètres $M_i$ peut être le bruit associé aux magnétomètres, ici de l'ordre de 0,4 μT. Par champ magnétique perturbé B, on entend le champ magnétique ambiant $B^{amb}$, c'est-à-dire non perturbé par l'aimant, auquel s'ajoute le champ magnétique $B^a$ généré par l'aimant. D'autres composantes magnétiques peuvent s'ajouter, comme une composante associée au bruit des capteurs, ainsi qu'une composante liée à la présence d'un perturbateur magnétique.

Le dispositif de suivi 1 comporte en outre une unité de calcul 4 apte à calculer la position de l'aimant 2 et son moment magnétique dans le repère XYZ à partir des mesures des magnétomètres $M_i$. De plus, comme décrit plus loin, l'unité de calcul 4 est apte à identifier un perturbateur magnétique 7 situé au voisinage du réseau de magnétomètres.

Pour cela, chaque magnétomètre $M_i$ est électriquement connecté à l'unité de calcul par un bus de transmission d'informations (non représenté). L'unité de calcul 4 comporte un processeur 5 programmable apte à exécuter des instructions enregistrées sur un support d'enregistrement d'informations. Il comporte en outre une mémoire 6 contenant les instructions nécessaires pour la mise en oeuvre du procédé de suivi de l'aimant 2 et d'une phase d'identification du perturbateur magnétique 7 par le processeur. La mémoire 6 est également adaptée à stocker les informations calculées à chaque instant de mesure.

L'unité de calcul 4 implémente un modèle mathématique associant la position de l'aimant permanent dans le repère XYZ, ainsi que l'orientation et l'intensité du moment magnétique, aux mesures des magnétomètres $M_i$. Ce modèle mathématique est construit à partir des équations de l'électromagnétisme, en particulier de la magnétostatique, et est paramétré notamment par les positions et orientations des magnétomètres dans le repère XYZ. Ici, ce modèle est non linéaire. L'unité de calcul met en oeuvre un algorithme d'estimation de sa solution tel que, par exemple, un filtrage bayésien ou une optimisation, voire tout autre algorithme du même type.

De préférence, pour pouvoir approximer l'aimant permanent à un dipôle magnétique, la distance entre l'aimant permanent et chaque magnétomètre $M_i$ est supérieure à 2, voire 3 fois la plus grande dimension de l'aimant permanent. Cette dimension peut être inférieure à 20cm, voire inférieure à 10cm, voire à 5cm. L'aimant peut être modélisé par un modèle dipolaire, entre autres, en fonction notamment de la distance entre l'aimant à suivre et le réseau de magnétomètres.

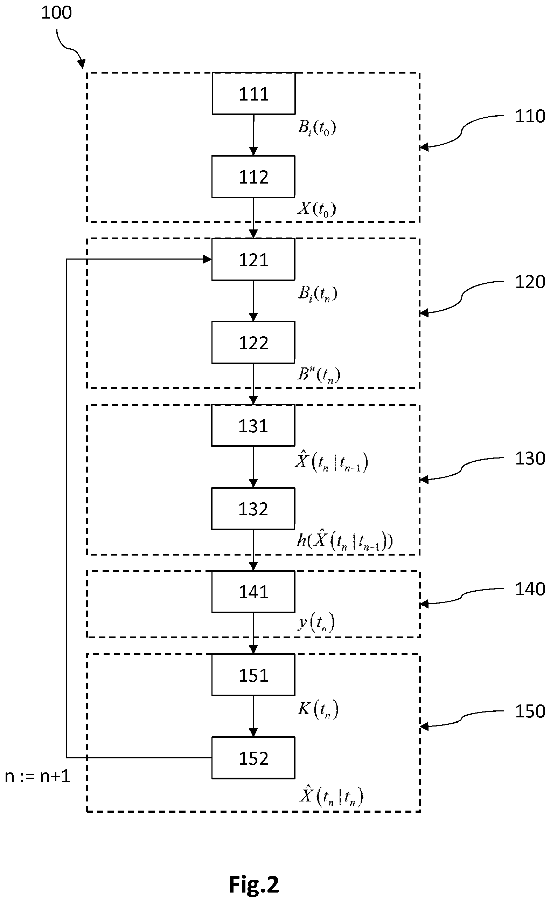

La figure 2 est un organigramme d'un exemple de procédé d'estimation 100 d'une position de l'aimant effectué par le dispositif de suivi, au cours duquel l'aimant est déplacé relativement au réseau de magnétomètres dans le repère XYZ, ici selon un premier mode de réalisation dans lequel l'algorithme d'estimation mis en oeuvre est un filtrage bayésien. Dans cet exemple, le filtrage bayésien est un filtre de Kalman, tel qu'un filtre de Kalman étendu.

Le procédé d'estimation de la position, également appelé procédé de suivi, comporte une phase 110 d'initialisation. Cette phase comporte la mesure 111 du champ magnétique généré par l'aimant et l'initialisation 112 d'un vecteur d'état X associé à l'aimant, pour un instant de référence $t_0$.

Pour cela, lors d'une première étape 111, à un instant de référence $t_0$, le champ magnétique $B_i(t_0)$ est mesuré par chaque magnétomètre $M_i$ du réseau. Lors de cette étape, l'aimant permanent peut n'être pas présent, donc pas détectable par le réseau de magnétomètres, de sorte que le champ magnétique mesuré $B_i(t_0)$ mesuré par le magnéto-mètre $M_i$ comporte les composantes suivantes :

$$B_i(t_0) = B_i^{amb} + B_i^n(t_0) + B_i^a(t_0)$$
$$= B_i^{amb} + B_i^b(t_0)$$

où $B_i^{amb}$ est une composante associée au champ magnétique terrestre, où $B_i^n$ est une composante associée au bruit de l'environnement et des capteurs, qui, en l'absence de perturbateur magnétique au voisinage du dispositif de suivi, correspond essentiellement à une composante $B_i^b$ associée au bruit du magnétomètre $M_i$ correspondant, et où $B_i^a$ est une composante ici nulle du champ magnétique généré par l'aimant et mesuré par le magnétomètre $M_i$.

Le perturbateur magnétique est un objet parasite différent de l'aimant à suivre, cet objet étant susceptible d'émettre un champ magnétique parasite $B^p$ et/ou d'entraîner la formation d'un champ magnétique induit $H^{p,i}.B^a$ par interaction avec le champ magnétique $B^a$ de l'aimant 2 à suivre.

Lors d'une étape 112, il est affecté un vecteur d'état $\hat{X}(t_0)$ à l'aimant permanent, à l'instant de référence $t_0$. Le vecteur d'état est formé de variables représentatives de la position (x,y,z) et du moment magnétique ($m_x$,$m_y$,$m_z$) de l'aimant 2 dans le repère XYZ. La position de l'aimant et les coordonnées du moment magnétique peuvent être définies arbitrairement ou peuvent correspondre à des valeurs prédéterminées.

Les étapes suivantes sont effectuées de manière itérative à un instant de mesure $t_n$ incrémenté, le temps étant discrétisé à une fréquence d'échantillonnage déterminée, par exemple à 140Hz. A chaque itération de rang n est associé un instant de mesure $t_n$, également appelé instant courant.

Le procédé de suivi comporte ensuite une phase 120 de mesure. Cette phase comporte la mesure du champ magnétique par le réseau de magnétomètres à l'instant de mesure $t_n$ et le calcul du champ magnétique dit utile $B^u$ généré par l'aimant 2.

Lors d'une étape 121, à l'instant de mesure $t_n$, le champ magnétique $B_i(t_n)$ est mesuré par chaque magnétomètre $M_i$ du réseau. Lors de cette étape, l'aimant permanent est détectable par le réseau, de sorte que le champ magnétique $B_i(t)$ mesuré par chaque magnétomètre $M_i$ comporte les composantes suivantes :

$$B_i(t_n) = B_i^{amb} + B_i^n(t_n) + B_i^a(t_n)$$
$$= B_i^{amb} + B_i^b(t_n) + B_i^a(t_n)$$

où on retrouve le champ magnétique $B^a$ généré par l'aimant permanent à l'instant courant t, le bruit associé aux capteurs $B^b$ et le champ ambiant $B^{amb}$.

Lors d'une étape 122, le champ magnétique $B^u$ dit utile est calculé à partir des mesures du champ magnétique $B_i(t_0)$ et $B_i(t_n)$. Il correspond ici à un vecteur dont les dimensions dépendent du nombre de magnétomètres et du nombre de valeurs de mesure effectuée par chaque magnétomètre. Plus précisément, le champ magnétique utile $B^u$ est obtenu par soustraction du champ magnétique $B(t_0)$ mesuré à l'instant de référence $t_0$ au champ magnétique $B(t_n)$ mesuré à l'instant de mesure $t_n$ :

$$B_i^u(t_n) = B_i(t_n) - B_i(t_0)$$
$$= B_i^a(t_n) - B_i^a(t_0) = B_i^a(t_n)$$

où la différence temporelle de la composante terrestre $B^{amb}$ entre $t_0$ et $t_n$ peut être négligée, tout comme celle de la composante $B^b$ liée au bruit des magnétomètres. Il reste ainsi essentiellement, outre le cas échéant des termes liés à un défaut de calibration et/ou à un *offset* issu d'une possible aimantation des magnétomètres, la composante $B^a$ du champ magnétique généré par l'aimant à l'instant courant $t_n$.

Le procédé de suivi comporte ensuite une phase 130 d'estimation d'un champ magnétique généré par l'aimant en fonction d'un vecteur d'état obtenu à un instant de mesure précédent.

Lors d'une étape 131, on prédit un vecteur d'état dit prédit $\hat{X}(t_n \mid t_{n-1})$ associé à l'aimant, à partir de l'état estimé $\hat{X}(t_{n-1} \mid t_{n-1})$ à l'instant précédent $t_{n-1}$ ou à partir de l'état estimé $\hat{X}(t_0)$ à l'instant initial de la phase 110. L'état prédit de l'aimant peut être calculé à partir de la relation suivante :

$$\hat{X}(t_n \mid t_{n-1}) = F(t_n).\hat{X}(t_{n-1} \mid t_{n-1}) = \hat{X}(t_{n-1} \mid t_{n-1})$$

où $F(t_n)$ est une matrice de prédiction qui relie l'état estimé précédent $\hat{X}(t_{n-1} \mid t_{n-1})$ à l'état prédit courant $\hat{X}(t_n \mid t_{n-1})$. Dans cet exemple, la matrice de prédiction F est la matrice identité, mais d'autres formulations sont possibles. Ainsi, en variante, la fonction de prédiction peut prendre en compte un ou plusieurs états précédents, et éventuellement une estimation de paramètres cinématiques relatifs à un déplacement et/ou à une rotation de l'aimant au cours d'instants de mesure précédents.

Lors de cette même étape 131, on calcule également la matrice $P(t_n|t_{n-1})$ d'estimation *a priori* de la covariance de l'erreur, qui correspond à la mesure de la précision de l'état prédit courant $\hat{X}(t_n \mid t_{n-1})$, à partir de la relation suivante :

$$P(t_n|t_{n-1}) = F(t_n).P(t_{n-1}|t_{n-1}).F^T(t_n) + Q(t_n) = P(t_{n-1}|t_{n-1}) + Q(t_n)$$

où $F(t_n)$ est ici la matrice identité, $Q(t_n)$ est la matrice de covariance du bruit du *processus*, $^T$ est l'opérateur de transposition, et $P(t_{n-1}|t_{n-1})$ est la matrice de covariance de l'erreur qui est issue de l'instant précédent $t_{n-1}$. Lors de la première itération à n=1, la matrice $P(t_{n-1}|t_{n-1})$ peut être initialisée par une matrice diagonale.

Lors d'une étape 132, on calcule le champ magnétique dit estimé, généré par l'aimant, en fonction du vecteur d'état prédit $\hat{X}(t_n \mid t_{n-1})$, à l'instant courant $t_n$, à partir d'une fonction h dite d'observation, également appelée fonction de mesure. La fonction d'observation h est basée sur un modèle physique construit à partir des équations de l'électromagnétisme qui associe un champ magnétique estimé aux valeurs estimées de la position (x,y,z) et du moment magnétique $(m_x, m_y, m_z)$ de l'aimant. Ainsi, le terme peut s'exprimer suivant la relation suivante :

$$h(\hat{X}(t_n \mid t_{n-1})) = \hat{B}^a(t_n) + \varepsilon^m$$

où $\hat{B}^a$ est la composante représentative du champ magnétique estimé de l'aimant à l'instant courant $t_n$, et $\varepsilon^m$ est une composante associée à des erreurs du modèle physique h.

Le procédé de suivi comporte ensuite une phase 140 de calcul d'un biais. Lors d'une étape 141, on calcule le biais à l'instant courant $t_n$, ici l'innovation $y(t_n)$, par différence entre le champ magnétique estimé $h(\hat{X}(t_n \mid t_{n-1}))$ à l'instant courant $t_n$, et le champ magnétique utile mesuré $B_i^u(t_n)$ à l'instant courant $t_n$ :

$$
\begin{aligned}
y(t_n) &= B^u(t_n) - h(\hat{X}(t_n \mid t_{n-1})) \\
&= B^a(t_n) - \left( \hat{B}^a(t_n) + \varepsilon^m \right) \\
&= -\varepsilon^m
\end{aligned}
$$

qui est alors essentiellement égal, au signe près, aux erreurs $\varepsilon^m$ du modèle physique, dans la mesure où le champ magnétique mesuré de l'aimant $B^a$ correspond sensiblement à son estimation obtenue lors de l'étape 132.

Le procédé de suivi comporte ensuite une phase 150 de calcul de la position estimée de l'aimant à l'instant courant $t_n$. Cette phase consiste à mettre à jour le vecteur d'état courant $\hat{X}(t_n|t_n)$ de l'aimant en corrigeant le vecteur d'état préalablement obtenu, à savoir ici l'état prédit courant $\hat{X}(t_n \mid t_{n-1})$, en fonction du biais $y(t_n)$ calculé.

Lors d'une étape 151, un terme dit de gain de Kalman $K(t_n)$ à l'instant courant $t_n$ est calculé à partir de la relation suivante :

$$K(t_n) = P(t_n \mid t_{n-1}).H^T(t_n).S(t_n)^{-1}$$

où la matrice $P(t_n|t_{n-1})$ d'estimation est obtenue lors de l'étape 310, H est la matrice d'observation, définie ici comme $H = \dfrac{\partial h}{\partial X_u}$ étant la jacobienne de la fonction d'observation h, avec u l'indice des variables du vecteur d'état, et S est la covariance de l'innovation, définie comme étant égale à $H(t_n).P(t_n \mid t_{n-1}).H^T(t_n) + R(t_n)$ où R est la matrice de covariance de la mesure de mesure et est donc représentative du bruit des capteurs.

Lors d'une étape 152, l'estimation du vecteur d'état $\hat{X}$ à l'instant de mesure $t_n$ est effectuée par mise à jour de l'état prédit courant $\hat{X}(t_n \mid t_{n-1})$ à partir du produit du terme d'innovation $y(t_n)$ et du gain de Kalman $K(t_n)$, tel qu'exprimé par la relation suivante :

$$\hat{X}(t_n \mid t_n) = \hat{X}(t_n \mid t_{n-1}) + y(t_n).K(t_n)$$

On effectue également la mise à jour de la matrice de covariance de l'erreur par la relation suivante :

$$P(t_n \mid t_n) = \left( I - K(t_n).H(t_n) \right).P(t_n \mid t_{n-1})$$

où I est la matrice identité.

On obtient ainsi la position estimée à l'instant de mesure $t_n$ à partir des variables du vecteur d'état estimé $\hat{X}$ relatives à la position (x,y,z) de l'aimant dans le repère XYZ. Le temps est ensuite incrémenté d'un incrément supplémentaire, et le procédé réitère les étapes précédemment décrites à l'instant courant $t_{n+1}$ suivant, ici à partir de la phase 110 de mesure. On effectue ainsi le suivi de l'aimant dans le repère XYZ.

Dans le cadre d'un filtre bayésien tel que le filtre de Kalman qui comporte une phase de prédiction et une phase de mise à jour, la prédiction est effectuée lors de l'étape 131, et la mise à jour par les étapes 132, 141, 151 et 152.

Cependant, les inventeurs ont mis en évidence que la présence d'un perturbateur magnétique au voisinage du dispositif de suivi peut entraîner une augmentation de l'incertitude associée à la position estimée de l'aimant dans le repère XYZ, voire gêner la convergence de l'algorithme d'estimation de la position de l'aimant.

En effet, en présence d'un perturbateur magnétique, le champ magnétique $B(t_n)$ mesuré à l'instant de mesure $t_n$ devient, pour chaque capteur de rang i :

$$B_i(t_n) = B_i^{amb} + B_i^n(t_n) + B_i^a(t_n)$$
$$= B_i^{amb} + \left[ B_i^p(t_n) + H_i^{p,i}(t_n).B_i^a(t_n) + B_i^b(t_n) \right] + B_i^a(t_n)$$

où la composante $B^n$ comporte maintenant un terme supplémentaire $B^p$ correspondant au champ magnétique permanent généré par le perturbateur magnétique, et éventuellement un terme $H^{p,i}.B^a$ correspondant au champ magnétique induit issu d'une interaction magnétique entre le perturbateur et l'aimant.

Le champ magnétique utile $B^u(t_n)$ calculé à l'instant courant $t_n$ devient, pour chaque capteur de rang i :

$$B_i^u(t_n) = B_i(t_n) - B_i(t_0)$$
$$= \Delta B_i^n(t_n) + B_i^a(t_n)$$
$$= \left[ B_i^p(t_n) + H_i^{p,i}(t_n).B_i^a(t_n) \right] + B_i^a(t_n)$$

qui comporte ainsi, outre le terme $B^a$ du champ magnétique généré par l'aimant, un terme associé au perturbateur magnétique (les termes associés aux défauts de calibration et/ou à l'offset d'aimantation ne sont ici pas détaillés).

Aussi, le terme d'innovation $y(t_n)$ devient maintenant :

$$y(t_n) = B^u(t_n) - h(\hat{X}(t_n | t_{n-1}))$$
$$= \left[ B_i^p(t_n) + H_i^{p,i}(t_n).B_i^a(t_n) \right] - \varepsilon^m$$

où le terme de bruit associé à la présence du perturbateur magnétique s'ajoute au terme lié au erreurs du modèle physique $\varepsilon^m$.

On comprend alors que l'estimateur récursif, qui tend à minimiser le terme d'innovation y, notamment par le biais de la jacobienne $H(t_n)$, et donc à minimiser les erreurs du modèle physique $\varepsilon^m$ en l'absence d'un perturbateur magnétique, peut être perturbé par la présence du terme lié au perturbateur magnétique. Une augmentation de l'erreur relative liée à la position estimée de l'aimant est alors possible, voire même une difficulté de l'algorithme à converger.

A titre d'exemple, la présence d'un téléphone portable au voisinage du réseau de magnétomètres peut provoquer de telles perturbations. Le téléphone portable, lorsqu'il est suffisamment proche du réseau de magnétomètres, est alors qualifié de perturbateur magnétique. Plus généralement, il s'agit par exemple de tout matériau ferromagnétique autre que l'aimant à suivre, tel que des parties d'une table, d'un casque audio, d'un appareil électronique, etc...

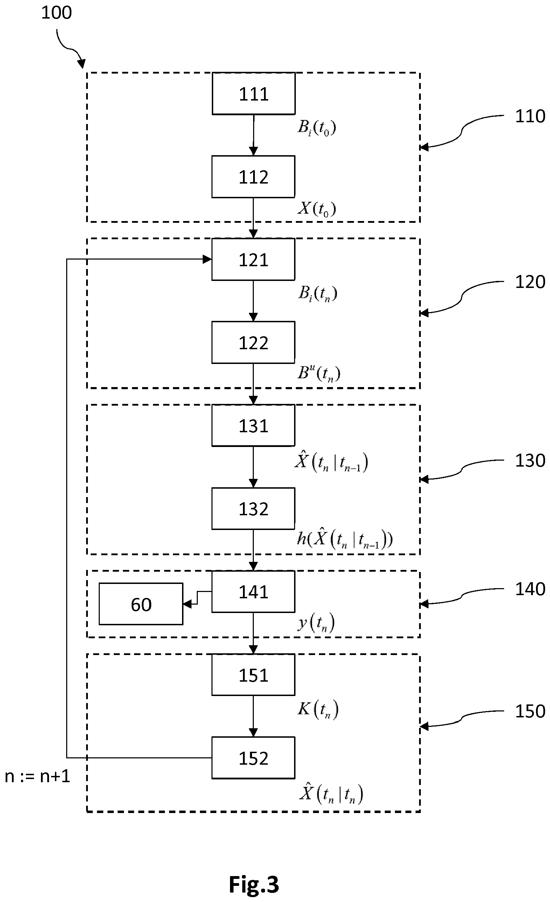

La figure 3 est un organigramme d'un procédé d'estimation d'une position de l'aimant selon le premier mode de réalisation, c'est-à-dire que la position de l'aimant est ici estimée à l'aide d'un filtre bayésien tel qu'un filtre de Kalman, par exemple étendu. Le procédé comporte une phase d'identification 60 d'un perturbateur magnétique situé au voisinage du réseau de magnétomètres.

La phase d'identification 60 permet de déterminer la présence éventuelle d'un perturbateur magnétique, dans le but par exemple d'indiquer à l'utilisateur d'écarter le perturbateur vis-à-vis du réseau de magnétomètres, voire d'identifier des magnétomètres situés à proximité du perturbateur à ne pas prendre en compte dans l'estimation de la position de l'aimant, pour ainsi effectuer le suivi de l'aimant avec la précision requise et/ou en minimisant les risques de défaut de convergence de l'algorithme d'estimation.

Ainsi, le procédé 100 de suivi de l'aimant comporte la phase 110 d'initialisation, la phase 120 de mesure, la phase 130 d'estimation, la phase 140 de calcul du biais, et la phase 150 de mise à jour. Ces étapes sont identiques ou similaires à celles détaillées précédemment et ne sont donc pas décrites à nouveau.

Le procédé 100 comporte cependant une phase 60 supplémentaire, permettant d'identifier la présence éventuelle d'un perturbateur magnétique au voisinage du réseau de magnétomètres.

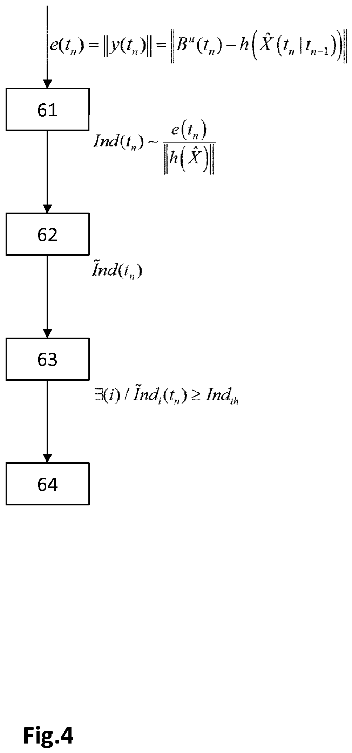

La figure 4 est un organigramme qui illustre un exemple de phase 60 d'identification du perturbateur magnétique.

Lors d'une étape 61, on calcule d'un terme dit indicateur Ind à l'instant courant $t_n$ à partir d'un paramètre d'écart $e(t_n)$ défini en fonction d'une différence entre une estimation du champ magnétique généré par l'aimant en fonction d'un vecteur d'état obtenu à un instant de mesure précédent ou mis à jour sur la base dudit modèle prédéterminé h, vis-à-vis du champ magnétique utile mesuré à l'instant de mesure. De préférence, l'indicateur est ici égal au rapport entre le paramètre d'écart $e(t_n)$ sur une estimation du champ magnétique estimé $h(\hat{X})$. Dans cet exemple, le paramètre d'écart $e(t_n)$ est égal à la norme 2 de l'innovation $y(t_n)$ obtenu à l'étape 141, et le champ magnétique estimé $h(\hat{X}(t_n | t_{n-1}))$ est ici celui correspondant au vecteur d'état prédit $\hat{X}(t_n | t_{n-1})$. Ainsi, les valeurs de l'indicateur $Ind(t_n)$ peuvent être calculées, par capteur de rang i, à partir de la relation suivante :

$$Ind_i(t_n) = \frac{e_i(t_n)}{\left\| h_i\left(\hat{X}\right)\right\|} = \frac{\left\| y_i(t_n)\right\|}{\left\| h_i\left(\hat{X}(t_n\,|\,t_{n-1})\right)\right\|}$$

$$= \frac{\left\| B^u_i(t_n) - h_i\left(\hat{X}(t_n\,|\,t_{n-1})\right)\right\|}{\left\| h\left(\hat{X}(t_n\,|\,t_{n-1})\right)\right\|}$$

$$= \frac{\left\| \left(B^p_i(t_n) + H^{p,i}_i(t_n).B^a_i(t_n)\right) - \varepsilon^m\right\|}{\left\| \hat{B}^a(t_n) + \varepsilon^m\right\|}$$

Autrement dit, le terme indicateur Ind($t_n$) est ici égal à la norme 2 du terme d'innovation y($t_n$) divisée ici par la norme 2 du terme d'estimation $h(\hat{X}(t_n\,|\,t_{n-1}))$ du champ magnétique généré par l'aimant, obtenu à l'étape 132. Ainsi, il ressort que la contribution magnétique associée au perturbateur (terme situé au numérateur) est divisée par la contribution magnétique associée à l'aimant (terme situé au dénominateur). Le terme indicateur représente ainsi la force de la perturbation magnétique. En variante, les valeurs du terme indicateur Ind$_i$($t_n$) peuvent être calculées pour chaque axe de mesure des capteurs, en adaptant le cas échéant la norme utilisée. Le rapport entre le terme d'écart e($t_n$) et le terme d'estimation $h(\hat{X})$ peut donc être une division termes à termes, voire une division des normes. Ainsi, le terme indicateur peut être un terme vectoriel ou un scalaire.

L'étape 62 illustre une étape facultative mais avantageuse de filtrage de l'indicateur calculé à l'étape 61, pour limiter l'effet d'une dynamique éventuellement importante de l'aimant en termes de déplacement et/ou de rotation. Il s'agit ainsi d'un filtrage passe-bas dont la constante de temps est fonction de la vitesse de déplacement et/ou de rotation. L'indicateur est ainsi filtré comme l'exprime la relation suivante :

$$\tilde{Ind}(t_n) = (1 - \alpha(t_n)).Ind(t_n) + \alpha(t_n).Ind(t_{n-1})$$

où Ind($t_n$) est l'indicateur calculé à l'étape 61 à l'instant courant $t_n$ et Ind($t_{n-1}$) est l'indicateur calculé à un instant courant précédent $t_{n-1}$, et où $\alpha(t_n)$ est un terme de filtrage inférieur à 1, à valeur constante ou calculée à l'instant courant $t_n$.

Ce terme de filtrage peut être défini à partir de la relation suivante :

$$\alpha(t_n) = a + b.\left(V(t_n)\right)^{-1} \quad ; \quad V(t_n) = \frac{\left\| \hat{X}(t_{n-1}\,|\,t_{n-1}) - \hat{X}(t_{n-2}\,|\,t_{n-2})\right\|}{\Delta t}$$

où a et b sont des scalaires prédéterminés, et où $V(t_n)$ est un terme cinématique exprimant la dynamique de l'aimant en termes de déplacement et/ou de rotation. Le terme cinématique est ainsi défini comme la différence entre les vecteurs d'état à deux instants de mesure successifs divisée par l'incrément de temps.

Ainsi, l'indicateur filtré $\tilde{Ind}(t_n)$ permet de limiter, dans le terme d'innovation, la part liée à la cinématique de l'aimant entre deux instants de mesure. Cette part peut devenir importante lorsque le temps caractéristique de la dynamique de l'aimant devient égal voire supérieur au temps d'échantillonnage.

Lors d'une étape 63, on compare l'indicateur Ind($t_n$), ici l'indicateur filtré $\tilde{Ind}(t_n)$ , à une valeur seuil prédéterminée Ind$_{th}$. Et lorsqu'il en est supérieur, le perturbateur est alors identifié comme étant présent. Dans le cas où l'indicateur Ind($t_n$) est une grandeur vectorielle, on compare chaque valeur de l'indicateur à la valeur seuil et le perturbateur est identifié lorsqu'au moins une valeur $\tilde{Ind}_i(t_n)$ est égale voire supérieure à la valeur seuil Ind$_{th}$. A titre d'exemple, la valeur seuil peut être égale à 14% environ. De manière similaire, lorsque le terme indicateur est un scalaire, on compare celui-ci à la valeur seuil Ind$_{th}$.

Lors d'une étape 64, un signal peut être émis à destination de l'utilisateur, pour l'inviter à déplacer le perturbateur jusqu'à ce que chaque valeur $\tilde{Ind}_i$, à un instant de mesure t>$t_n$ suivant, devienne inférieure à la valeur seuil. Le signal peut être une information affichée sur un écran d'affichage représentant le réseau de magnétomètres. L'information affichée peut se présenter comme une carte de dite de chaleur dont un scalaire d'intensité est attribué à chaque magnétomètre M$_i$, le scalaire d'intensité correspond à une valeur $\tilde{Ind}_i$ de l'indicateur. De manière avantageuse, les valeurs de l'indicateur Ind($t_n$) sont pondérées par un facteur de pondération, voire simplement écrêtées de telle sorte les valeurs de l'indicateur s'échelonnent entre une valeur minimale, par exemple 0, et une valeur maximale, par exemple 255, et que les fortes valeurs initiales sont atténuées au profit des faibles valeurs initiales. Ainsi, les valeurs de l'indicateur pondéré mettent en évidence les faibles perturbations magnétiques. Dans le cas où l'indicateur *Ind* ne revient pas à une valeur inférieure à la valeur seuil à partir d'un délai prédéterminé, la phase d'initialisation 100 peut être effectuée.

Ainsi, le procédé 100 de suivi de l'aimant comporte une phase 60 permettant d'identifier simplement un perturbateur magnétique situé au voisinage du réseau de magnétomètres. En effet, le terme indicateur $Ind(t_n)$ utilise, dans cet exemple, l'information relative au perturbateur magnétique déjà contenue dans le terme d'innovation. On évite ainsi d'avoir à utiliser un dispositif et un procédé spécifiques et dédiés à l'identification du perturbateur magnétique.

De plus, le fait de calculer le terme indicateur $Ind(t_n)$ à partir d'un rapport du terme d'écart $e(t_n)$ (ici la norme de l'innovation) sur le terme d'estimation $h(\hat{X})$ permet de simplement différencier la composante $B_i^p(t_n) + H_i^{p,i}(t_n)$. $B_i^a(t_n)$ associée au perturbateur magnétique, vis-à-vis de la composante $\varepsilon^m$ associée aux erreurs du modèle physique. En effet, sans cette définition de l'indicateur comme rapport du terme d'écart sur le terme d'estimation, il peut être délicat de différencier les composantes associées au perturbateur et aux erreurs du modèle. En effet, la composante $\varepsilon^m$ présente une intensité qui peut évoluer en $1/d_i^k$, avec k augmente lorsque d diminue, $d_i$ étant la distance séparant l'aimant du magnétomètre $M_i$, cette intensité pouvant augmenter lorsque l'aimant est très proche du magnétomètre $M_i$ considéré, et ainsi devenir prépondérante vis-à-vis de la composante associée au perturbateur magnétique. Autrement dit, la définition du terme indicateur $Ind(t_n)$ comme rapport du terme d'écart $e(t_n)$ sur le terme d'estimation $h(\hat{X})$ permet de bien mettre en évidence la composante associée au perturbateur magnétique.

Il apparaît également que l'indicateur $Ind(t_n)$ est, d'une certaine manière, un rapport signal à bruit (SNR) dans le sens où le signal utile est ici le champ magnétique estimé $h(\hat{X})$ et le bruit associé à la présence du perturbateur magnétique est introduit par l'écart entre le champ magnétique mesuré $B^u$ et le terme d'estimation $h(\hat{X})$.

Par ailleurs, la phase d'identification 60 reste opérationnelle que le perturbateur magnétique soit présent ou non lors de la phase 100 d'initialisation. En effet, dans le cas où le perturbateur magnétique est présent à $t_0$ et reste stationnaire dans le plan XYZ du réseau de magnétomètres, le champ utile mesuré $B^u(t_n)$ comporte un terme de différentiel temporel $\Delta B_i^p = B_i^p(t_n) - B_i^p(t_0)$ sensiblement nul, alors que le terme d'induit $H_i^{p,i}(t_n)$. $B_i^a(t_n)$ reste non nul. Dans le cas où le perturbateur magnétique est présent à $t_0$ mais non stationnaire (du fait d'un déplacement relatif du perturbateur vis-à-vis du réseau de magnétomètres), le terme de différentiel temporel $\Delta B_i^p$ est non nul. Enfin, lorsque le perturbateur magnétique est initialement absent du voisinage du réseau de magnétomètres à $t_0$ mais devient ensuite présent, le terme de différentiel temporel $\Delta B_i^p$ ainsi que le terme d'induit $H_i^{p,i}(t_n)$. $B_i^a(t_n)$ apparaissent et prennent une valeur non nulle.

De manière avantageuse, l'indicateur $Ind(t_n)$ peut comporter, au dénominateur, une constante prédéterminée c représentative d'un biais d'au moins un magnétomètre, par exemple une valeur représentative du bruit capteur, par exemple de l'ordre de $0,3\mu T$, voire une valeur représentative d'un seuil de détection, par exemple de l'ordre de $10\mu T$. Cette valeur prédéterminée peut également être représentative d'un défaut de calibration ou d'une erreur de mesure liée à une aimantation d'au moins un magnétomètre. Ainsi, l'indicateur $Ind(t_n)$ peut s'écrire, ici par capteur i :

$$Ind_i(t_n) = \frac{e_i(t_n)}{\|h_i(\hat{X})\| + c}$$

Ainsi, les valeurs de l'indicateur sont fiabilisées dans le sens où on évite que l'indicateur présente des valeurs trop élevées, notamment lorsque le champ magnétique estimé par l'aimant est faible voire nul. Par ailleurs, on s'affranchit non seulement des erreurs du modèle physique utilisé mais également du biais que peuvent présenter les magnétomètres.

En variante, l'indicateur $Ind(t_n)$ peut s'écrire comme le rapport du paramètre d'écart $e(t_n)$ sur la constante prédéterminée c représentative du biais d'au moins un magnétomètre. Ainsi, on s'affranchit des erreurs de mesure associées au biais des capteurs, ces erreurs étant présentent dans le terme $B^u$ présent dans le paramètre d'écart $e(t_n)$ et dans la constante prédéterminée c. L'indicateur $Ind(t_n)$ peut ainsi s'écrire, ici par capteur :

$$Ind_i(t_n) = \frac{e_i(t_n)}{c}$$

En variante, l'indicateur Ind(t$_n$) peut s'écrire comme le rapport du paramètre d'écart e(t$_n$) sur le champ magnétique mesuré B$^u$(t$_n$), avec ou sans la constante prédéterminée c au dénominateur. Ainsi, on obtient un indicateur dont les valeurs varient en fonction de l'intensité du signal associé au perturbateur magnétique vis-à-vis de l'intensité du champ magnétique estimé généré par l'aimant. L'indicateur Ind(t$_n$) peut ainsi s'écrire, ici par capteur :

$$Ind_i(t_n) = \frac{e_i(t_n)}{\left\| B^u_i(t_n) \right\|}$$

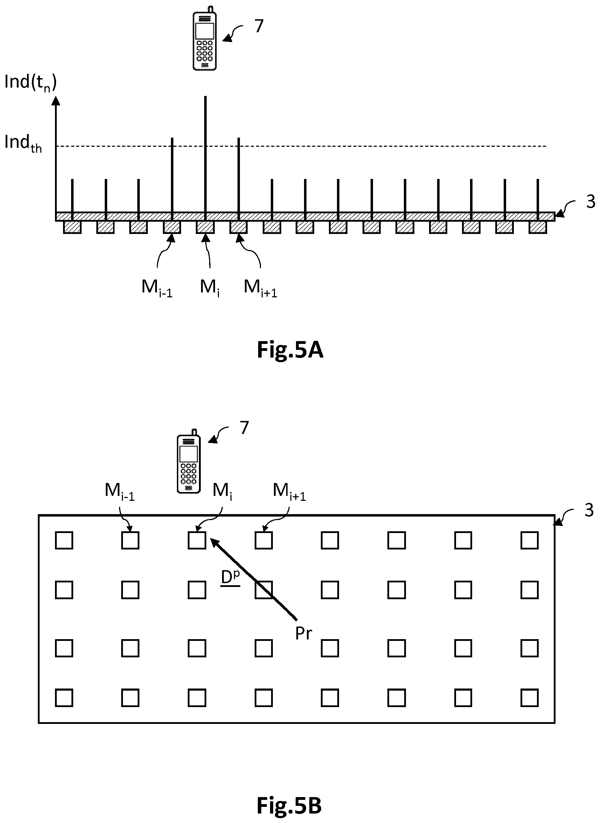

Les figures 5A et 5B illustrent des vues en coupe (fig.5A) et de dessus (fig.5B) d'un exemple de réseau de magnétomètres au voisinage duquel est situé un perturbateur magnétique.

Sur la fig.5A est illustré un exemple de répartition des valeurs d'intensité de perturbation $\tilde{Ind}_i$ pour chaque magnétomètre M$_i$. Pour les magnétomètres M$_{i-1}$, M$_i$ et M$_{i+1}$ au voisinage desquels est situé le perturbateur magnétique, les valeurs de l'indicateur dépassent la valeur seuil $Ind_{th}$ de sorte que le perturbateur magnétique est correctement identifié et localisé. Pour les autres magnétomètres, les valeurs de l'indicateur correspondantes sont inférieures à la valeur seuil.

Comme l'illustre la fig.5B, à partir de l'indicateur représenté sous la forme d'une carte de chaleur, un vecteur de direction D$^p$ associé au perturbateur magnétique peut être calculé et affiché. Le vecteur de direction D$^p$ peut être obtenu à partir de la moyenne des positions des magnétomètres pondérées chacune par le scalaire d'intensité de perturbation correspondant, et de la position du centre Pr du réseau de magnétomètres. Ainsi, l'utilisateur reçoit une information indiquant la direction suivant laquelle est situé le perturbateur par rapport au réseau de magnétomètres. Il est alors en mesure de procéder au retrait du perturbateur hors du voisinage des magnétomètres.

Le procédé 100 assure le suivi de l'aimant, et donc réitère la phase 120 de mesure, la phase 130 d'estimation du champ magnétique généré, la phase 140 de calcul du biais (ici l'innovation), et la phase 150 de calcul de la position estimée de l'aimant. A chaque incrémentation du temps de mesure, la phase 60 d'identification du perturbateur magnétique est effectuée.

Dans le cas où le perturbateur magnétique est encore présent au voisinage du réseau de magnétomètres, la phase 150 de calcul de la position estimée de l'aimant peut être effectuée sans prendre en considération les valeurs de mesure issues des magnétomètres M$_{i-1}$, M$_i$ et M$_{i+1}$, pour lesquels l'indicateur présente des valeurs locales supérieures à la valeur seuil.

Il peut être procédé à une étape de validation du suivi, en comparant par exemple la norme ou chaque composante du moment magnétique, voire de la position, issu du vecteur d'état estimé $\hat{X}(t_n | t_n)$ à l'étape 152, à une valeur de référence prédéterminée du type d'aimant utilisé.

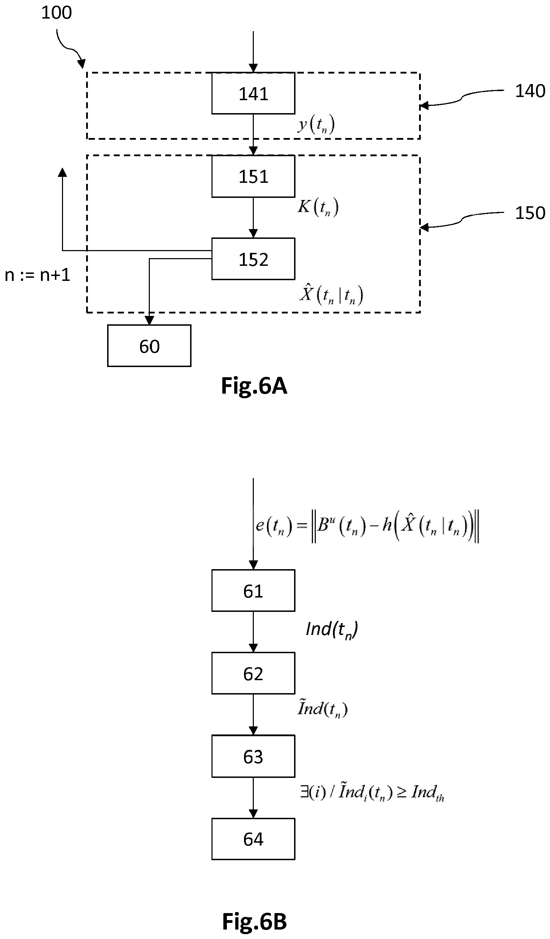

Les figures 6A et 6B illustrent chacune un organigramme représentant partiellement un procédé de suivi selon une variante du premier mode de réalisation. L'algorithme d'estimation mis en oeuvre est également un filtrage bayésien, et plus particulièrement ici un filtre de Kalman.

Dans cette variante, les différentes phases 110 (initialisation), 120 (mesure), 130 (calcul du champ magnétique estimé), 140 (calcul du biais, à savoir ici l'innovation), et 150 (calcul de la position estimée de l'aimant) du procédé de suivi 100 sont identiques ou similaires à celles décrites en référence à la figure 3 et ne sont pas reprises ici.

Le procédé 100 selon cette variante se distingue de celui décrit précédemment essentiellement en ce que la phase 60 d'identification du perturbateur magnétique n'est plus effectuée à partir du terme d'innovation, et donc du vecteur d'état prédit $\hat{X}(t_n | t_{n-1})$, mais à partir du vecteur d'état mis à jour $\hat{X}(t_n | t_n)$. Ainsi, la phase 60 est effectuée à la suite de l'étape 152.

Comme l'illustre la figure 6B, lors de l'étape 61, le terme indicateur Ind(t$_n$) est calculé à l'instant courant t$_n$ comme étant égal au rapport entre le terme d'écart e(t$_n$) sur une estimation du champ magnétique estimé $h(\hat{X})$. Dans cet exemple, le terme d'écart e(t$_n$) n'est donc pas égal à l'innovation y(t$_n$) obtenu à l'étape 141, ni au champ magnétique estimé $h(\hat{X}(t_n | t_{n-1}))$ obtenu à l'étape 132. Au contraire, le terme d'estimation présent dans le terme d'écart e(t$_n$) et présent au dénominateur correspondent au vecteur d'état mis à jour $\hat{X}(t_n | t_n)$. Ainsi, le terme indicateur Ind(t$_n$) peut être ici calculé à partir de la relation suivante, ici avec la constante prédéterminée c représentative du biais d'au moins un capteur :

$$Ind_i(t_n) = \frac{e_i(t_n)}{\left\| h_i(\hat{X}) \right\| + c} = \frac{\left\| B^u_i(t_n) - h_i\left(\hat{X}(t_n | t_n)\right) \right\|}{\left\| h_i\left(\hat{X}(t_n | t_n)\right) \right\| + c}$$

Ainsi, l'identification du perturbateur magnétique est rendue plus précise dans la mesure où l'indicateur est calculé à partir du vecteur d'état mis à jour et non pas à partir du vecteur d'état prédit. Le paramètre d'écart $e(t_n)$ ne diffère de l'innovation $y(t_n)$ essentiellement par le vecteur d'état $\hat{X}$ considéré. La fonction d'observation h est la même et le champ magnétique utile $B^u$ également.

Comme précédemment, la phase 60 d'identification du perturbateur magnétique comporte l'étape 63 de comparaison de la ou des valeurs de l'indicateur à une valeur seuil prédéterminée. Elle peut en outre comporter l'étape 62 de filtrage passe-bas dans le but de réduire l'influence de la cinématique présente éventuellement entre deux vecteurs d'état successifs. Elle peut également comporter une étape d'écrêtage ou de pondération des fortes valeurs de l'indicateur, notamment lorsque ces valeurs expriment une saturation de la mesure des magnétomètres concernés.

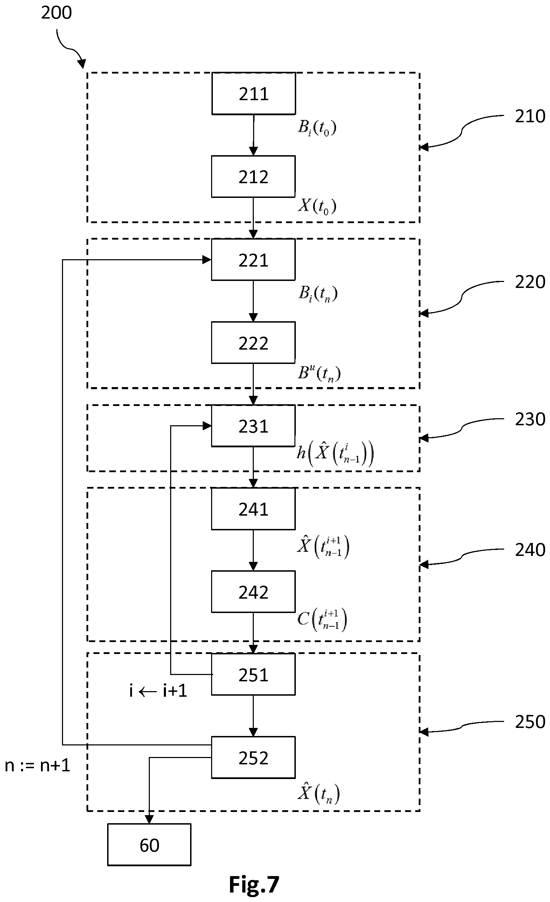

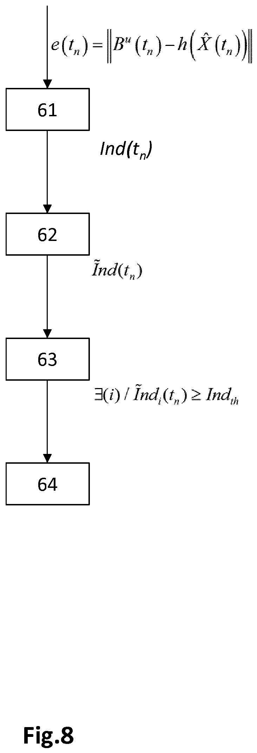

Les figures 7 et 8 illustrent chacune un organigramme représentant partiellement un procédé 200 de suivi selon un deuxième mode de réalisation. L'algorithme d'estimation mis en oeuvre est alors une optimisation, notamment par minimisation d'une fonction de coût, ici par une descente de gradient.

Le procédé 200 comporte une phase 210 d'initialisation et une phase 220 de mesure du champ magnétique $B_i(t_n)$ et de calcul du champ magnétique utile $B^u(t_n)$. Ces phases sont identiques ou similaires à celles décrites précédemment et ne sont pas détaillées ici.

Il comporte en outre plusieurs phases 230, 240, 250 effectuées successivement, pour un même temps de mesure $t_n$, dans une boucle itérative de minimisation d'une fonction de coût C. Le vecteur d'état $\hat{X}(t_n)$ à l'instant de mesure $t_n$ est ainsi obtenu par correction successive, suivant l'incrément i, du vecteur d'état $\hat{X}(t_{n-1})$ de l'instant de mesure précédent $t_{n-1}$. Il comporte ainsi une phase 230 d'estimation du champ magnétique généré en fonction d'un vecteur d'état obtenu préalablement, une phase 240 de calcul d'un biais, ici une fonction de coût C, et une phase 250 de calcul de la position estimée de l'aimant à l'instant courant $t_n$.

La phase 230 d'estimation du champ magnétique $h(\hat{X})$ généré pour un vecteur d'état obtenu préalablement est similaire aux phases 130 décrites précédemment. A l'instant de mesure $t_n$, il s'agit du vecteur d'état obtenu lors de la phase 250 à l'instant de mesure précédent $t_{n-1}$ ou du vecteur d'état $\hat{X}(t_0)$ défini lors de l'initialisation à l'instant $t_0$, éventuellement corrigé en fonction de l'incrément i de la correction itérative de minimisation d'une fonction de coût C.

On note ainsi $t_{n-1}^{i}$ l'instant de mesure $t_{n-1}$ à l'incrément i.

Ainsi, lors d'une étape 231, on calcule, à l'instant courant $t_n$, le champ magnétique estimé $h(\hat{X}(t_{n-1}^{i}))$ correspondant au vecteur d'état $\hat{X}(t_{n-1}^{i})$ obtenu préalablement à l'instant de mesure $t_{n-1}$, éventuellement corrigé en fonction de l'incrément i. Lorsque l'incrément i est égal à 1, la boucle de correction n'a pas encore fait un tour et le vecteur d'état $\hat{X}(t_{n-1}^{1})$ est celui $\hat{X}(t_{n-1})$ calculé à l'étape 252 de la phase 250. Lorsque l'incrément i est supérieur à 1, la boucle de correction a déjà fait un tour et le vecteur d'état diffère de celui $\hat{X}(t_{n-1})$ calculé à l'étape 252 par au moins un terme de correction. Comme détaillé précédemment, le champ magnétique estimé $h(\hat{X})$ est calculé à partir de la fonction h d'observation, également appelée fonction de mesure.

La phase 240 de calcul du biais, ici la fonction de coût C à minimiser, comporte une étape 241 de correction du vecteur d'état, suivie d'une étape de calcul de la fonction de coût C.

Lors de l'étape 241, on corrige le vecteur d'état à l'incrément précédent suivant, dans cet exemple, une relation correspondant à un algorithme de descente du gradient :

$$\hat{X}\left(t_{n-1}^{i+1}\right) = \hat{X}\left(t_{n-1}^{i}\right) - \mu.\nabla_X\left[C\left(\hat{X}\left(t_{n-1}^{i}\right)\right)\right]$$

$$= \hat{X}\left(t_{n-1}^{i}\right) - \mu.\nabla_X\left[f\left(h\left(\hat{X}\right) - B^u\left(t_n\right)\right)\right]$$

où $\mu$ est le pas dont la valeur, positive, peut dépendre de l'incrément i, $\nabla_X$ est l'opérateur gradient en fonction des variables du vecteur d'état, et $C(\hat{X})$ la fonction de coût à minimiser qui dépend de la différence entre un champ magnétique estimé $h(\hat{X})$ vis-à-vis du champ magnétique mesuré utile $B^u$. A titre illustratif, la relation précédente peut s'écrire, ici dans le cas des moindres carrés, avec $C(\hat{X})=\|h(\hat{X})- B^u\|^2$ :

$$\hat{X}\left(t_{n-1}^{i+1}\right) = \hat{X}\left(t_{n-1}^{i}\right) - \mu.\nabla_X\left[C\left(\hat{X}\left(t_{n-1}^{i}\right)\right)\right]$$

$$= \hat{X}\left(t_{n-1}^{i}\right) - 2\mu.H^T\left(\hat{X}\left(t_{n-1}^{i}\right)\right).\left(h\left(\hat{X}\left(t_{n-1}^{i}\right)\right) - B^u\left(t_n\right)\right)$$

où $H^T$ est la transposée de la jacobienne de la fonction d'observation h appliquée au vecteur d'état à l'instant de mesure $t_{n-1}$ et à l'incrément i. D'autres expressions sont bien entendu possibles, par exemple dans le cadre d'une méthode de Gauss-Newton ou de Levenberg-Marquardt.

Lors de l'étape 242, on calcule la norme $\|C\|$ de la fonction de coût C. Plusieurs expressions sont possibles, par exemple $\|h(\hat{X})- B^u(t_n)\|^2$.

La phase 250 de calcul de la position estimée, à l'instant courant $t_n$, comporte une étape 251 dans laquelle on compare la norme $\|C\|$ à un seuil. Lorsque $\|C\|$ est supérieur au seuil, l'incrément i est augmenté d'une itération, et la boucle de minimisation reprend à partir de l'étape 231 appliquée au vecteur d'état corrigé. Lorsque $\|C\|$ est inférieur ou égal au seuil, on obtient alors, dans l'étape 252, la valeur du vecteur d'état estimé $\hat{X}(t_n)$ pour l'instant courant $t_n$, qui prend la valeur du vecteur d'état corrigé $\hat{X}\left(t_{n-1}^{i+1}\right)$. Le temps est ensuite incrémenté d'un incrément supplémentaire, et le procédé réitère les étapes précédemment décrites à l'instant courant $t_{n+1}$ suivant, ici à partir de la phase 210 de mesure. On effectue ainsi le suivi de l'aimant dans le repère XYZ.

Le procédé de suivi 200 comporte également la phase 60 d'identification du perturbateur magnétique, celle-ci étant effectuée à partir du vecteur d'état estimé $\hat{X}(t_n)$ pour l'instant courant $t_n$, obtenu à l'étape 252. Elle est similaire à celle décrite en référence à la figure 6B.

Lors de l'étape 61, le terme indicateur $Ind(t_n)$ est calculé à l'instant courant $t_n$ comme étant égal au rapport entre le terme d'écart $e(t_n)$ sur une estimation du champ magnétique estimé $h(\hat{X})$. Dans cet exemple, le terme d'écart $e(t_n)$ est égal à la norme de la différence entre le champ magnétique $h(\hat{X}(t_n))$ estimé pour le vecteur d'état $\hat{X}(t_n)$ obtenu à l'étape 252, et le champ magnétique mesuré $B^u(t_n)$. Ainsi, l'indicateur $Ind(t_n)$ peut s'écrire, ici avec la constante prédéterminée c au dénominateur, et par capteur i :

$$Ind_i(t_n) = \frac{e_i(t_n)}{\left\|h_i\left(\hat{X}(t_n)\right)\right\| + c} = \frac{\left\|B^u_i(t_n) - h_i\left(\hat{X}(t_n)\right)\right\|}{\left\|h_i\left(\hat{X}(t_n)\right)\right\| + c}$$

Ainsi, le paramètre d'écart $e(t_n)$ diffère du biais, ici la fonction de coût C, essentiellement par le vecteur d'état $\hat{X}$ considéré. La fonction d'observation h est la même et le champ magnétique utile $B^u$ également.

En variante, comme mentionné précédemment, l'indicateur peut comporter au dénominateur le champ magnétique mesuré $B^u$ avec ou sans la constante prédéterminée c, voire la seule constante prédéterminée c.

Comme précédemment, la phase 60 d'identification du perturbateur magnétique comporte l'étape 63 de comparaison de la ou des valeurs de l'indicateur à une valeur seuil prédéterminée. Elle peut en outre comporter l'étape 62 de filtrage passe-bas dans le but de réduire l'influence de la cinématique présente éventuellement entre deux vecteurs d'état successifs. Elle peut également comporter une étape d'écrêtage ou de pondération des fortes valeurs de l'indicateur, notamment lorsque ces valeurs expriment une saturation de la mesure des magnétomètres concernés.

Des modes de réalisation particuliers viennent d'être décrits. Différentes variantes et modifications apparaîtront à l'homme du métier.

**Revendications**

1. Procédé d'estimation de la position d'un aimant (2) par un dispositif de suivi (1) comportant un réseau de magnétomètres ($M_i$) aptes à mesurer un champ magnétique, le procédé étant mis en oeuvre par un processeur, comportant les phases suivantes :

  ◦ détermination (110 ; 210) d'un vecteur d'état dit initial associé à l'aimant, pour un instant de mesure initial, le vecteur d'état comportant des variables représentatives de la position de l'aimant par rapport au réseau de magnétomètres ;
  ◦ mesure (120 ; 220) par le réseau de magnétomètres d'un champ magnétique dit utile ($B^u(t_n)$), à un instant de

mesure ($t_n$), en présence de l'aimant ;

∘ estimation (130 ; 230) d'un champ magnétique ($h(\hat{X})$) généré par l'aimant, en fonction du vecteur d'état ($\hat{X}(t_{n-1})$) obtenu à un instant de mesure précédent, sur la base d'un modèle prédéterminé (h) exprimant une relation entre le champ magnétique généré par l'aimant et le vecteur d'état de l'aimant ;

∘ calcul (140 ; 240) d'un biais (y($t_n$) ; C($t_n$)) par différence entre ledit champ magnétique estimé ($h(\hat{X}(t_{n-1}))$) et ledit champ magnétique utile mesuré ($B^u(t_n)$) ;

∘ mise à jour (150 ; 250) du vecteur d'état ($\hat{X}(t_n)$) en fonction du biais calculé (y($t_n$) ; C($t_n$)), permettant ainsi d'obtenir une position estimée de l'aimant à l'instant de mesure ($t_n$) ;

∘ réitération des phases de mesure, d'estimation, de calcul du biais et de mise à jour, sur la base du vecteur d'état mis à jour, en incrémentant l'instant de mesure ;

**caractérisé en ce qu'**il comporte en outre la phase suivante :

∘ identification (60), à chaque instant de mesure ($t_n$), de la présence d'un perturbateur magnétique distinct de l'aimant et situé au voisinage du réseau de magnétomètres, comportant les étapes suivantes :

■ calcul (61) d'un paramètre dit indicateur ($Ind(t_n)$) à partir d'un paramètre d'écart ($e(t_n)$) défini en fonction d'une différence entre un champ magnétique dit estimé ($h(\hat{X})$) généré par l'aimant pour le vecteur d'état obtenu à l'instant de mesure précédent ($\hat{X}(t_{n-1})$) ou le vecteur d'état mis à jour ($\hat{X}(t_n)$), sur la base dudit modèle prédéterminé ($h$), et ledit champ magnétique utile ($B^u(t_n)$) mesuré à l'instant de mesure ($t_n$) ;

■ comparaison (63) de l'indicateur ($Ind(t_n)$) à une valeur seuil ($Ind_{th}$) prédéterminée, et identification de la présence du perturbateur magnétique lorsqu'au moins l'une des valeurs de l'indicateur ($Ind(t_n)$) est supérieure ou égale à la valeur seuil ($Ind_{th}$) ;

■ émission (64) d'un signal à l'utilisateur invitant à écarter le perturbateur magnétique vis-à-vis du réseau de magnétomètres, tant que l'indicateur ($Ind(t_n)$) est supérieur ou égal à la valeur seuil ($Ind_{th}$) prédéterminée, et retrait par l'utilisateur du perturbateur vis-à-vis du réseau de magnétomètres.

2. Procédé selon la revendication 1, dans lequel ledit signal émis comporte une information indiquant la direction suivant laquelle est situé le perturbateur magnétique vis-à-vis du réseau de magnétomètres.

3. Procédé selon la revendication 1 ou 2, dans lequel l'indicateur ($Ind_i(t_n)$) est déterminé pour chaque magnétomètre ($M_i$), et lorsque le perturbateur magnétique est encore présent au voisinage du réseau de magnétomètre, la phase de mise à jour (150 ; 250) du vecteur d'état est effectuée sans prendre en considération les valeurs de mesure issues des magnétomètres ($M_i$) pour lesquelles l'indicateur ($Ind_i(t_n)$) présente une valeur supérieure à la valeur seuil ($Ind_{th}$).

4. Procédé selon l'une quelconque des revendications 1 à 3, dans lequel l'indicateur ($Ind(t_n)$) est égal au rapport du paramètre d'écart ($e(t_n)$) sur un terme dénominateur comportant au moins le champ magnétique estimé ($h(\hat{X})$ de l'indicateur, le champ magnétique utile mesuré ($B^u(t_n)$) de l'indicateur, ou au moins une constante prédéterminée (c) représentative d'un biais d'au moins l'un desdits magnétomètres.

5. Procédé selon la revendication 4, dans lequel le terme dénominateur comporte le champ magnétique estimé ($h(\hat{X})$) dudit indicateur et ladite constante prédéterminée (c).

6. Procédé selon l'une quelconque des revendications 1 à 5, dans lequel les phases d'estimation (130 ; 230), de calcul du biais (140 ; 240) et de mise à jour (150, 250) sont effectuées par un algorithme d'estimation récursive bayésienne.

7. Procédé selon la revendication 6, dans lequel la phase d'estimation (130; 230) comporte :

- une étape d'obtention (131 ; 231) d'un vecteur d'état dit prédit à l'instant de mesure ($t_n$) en fonction d'un vecteur d'état ($\hat{X}(t_{n-1} \mid t_{n-1})$) obtenu à un instant de mesure précédent ($t_{n-1}$), et
- une étape de calcul (132 ; 242) du champ magnétique estimé ($h(\hat{X}(t_n \mid t_{n-1}))$) pour le vecteur d'état prédit ($\hat{X}(t_n \mid t_{n-1})$), et

la phase de calcul du biais (140 ; 240) comporte :

- une étape de calcul (141; 241) du biais, dit innovation (y($t_n$)), comme différence entre le champ magnétique estimé ($h(\hat{X}(t_n \mid t_{n-1}))$) pour le vecteur d'état prédit ($\hat{X}(t_n \mid t_{n-1})$) et ledit champ magnétique utile mesuré ($B^u(t_n)$).

**8.** Procédé selon la revendication 7, dans lequel le paramètre d'écart ($e(t_n)$) est égal à l'innovation ($y(t_n)$).

**9.** Procédé selon la revendication 7, dans lequel le paramètre d'écart ($e(t_n)$) est égal à la différence entre un champ magnétique estimé ($h(\hat{X})$) généré par l'aimant pour le vecteur d'état mis à jour ($\hat{X}(t_n)$), et ledit champ magnétique utile ($B^u(t_n)$) mesuré à l'instant de mesure ($t_n$).

**10.** Procédé selon l'une quelconque des revendications 1 à 7, dans lequel les phases d'estimation (130 ; 230), de calcul du biais (140 ; 240) et de mis à jour (150, 250) sont effectuées par un algorithme d'optimisation par minimisation itérative du biais, dit fonction de coût, à l'instant de mesure ($t_n$).

**11.** Procédé selon l'une quelconque des revendications 1 à 10, dans lequel le vecteur d'état comporte en outre des variables représentatives d'un moment magnétique de l'aimant.

**12.** Support d'enregistrement d'informations, comportant des instructions pour la mise en oeuvre du procédé selon l'une quelconque des revendications précédentes, ces instructions étant aptes à être exécutées par un processeur.

**Patentansprüche**

**1.** Verfahren zum Schätzen der Position eines Magneten (2) durch eine Verfolgungsvorrichtung (1), die eine Anordnung von Magnetometern ($M_i$) aufweist, die geeignet sind, ein Magnetfeld zu messen, wobei das Verfahren durch einen Prozessor implementiert wird, dass die folgenden Phasen aufweist:

> o Bestimmen (110; 210) eines sogenannten anfänglichen Zustandsvektors, der dem Magneten zugeordnet ist, für einen anfänglichen Messzeitpunkt, wobei der Zustandsvektor Variablen aufweist, die die Position des Magneten in Bezug auf die Anordnung von Magnetometern darstellen;
> o Messen (120; 220) durch die Anordnung von Magnetometern eines sogenannten Nutzmagnetfelds ($B^u(t_n)$) zu einem Messzeitpunkt ($t_n$) in Anwesenheit des Magneten;
> o Schätzen (130; 230) eines Magnetfelds ($h(\hat{X})$), das durch den Magneten erzeugt wird, in Abhängigkeit von dem Zustandsvektor ($\hat{X}(t_{n-1})$), der zu einem vorhergehenden Messzeitpunkt erhalten wird, auf der Basis eines vorbestimmten Modells (h), das eine Beziehung zwischen dem Magnetfeld, das durch den Magneten erzeugt wird, und dem Zustandsvektor des Magneten ausdrückt;
> o Berechnen (140; 240) einer Verzerrung ($y(t_n)$; $C(t_n)$) durch eine Differenz zwischen dem geschätzten Magnetfeld ($h(\hat{X}(t_{n-1}))$) und dem gemessenen Nutzmagnetfeld ($B^u(t_n)$);
> o Aktualisieren (150; 250) des Zustandsvektors ($\hat{X}(t_n)$) in Abhängigkeit von der berechneten Verzerrung ($y(t_n)$; $C(t_n)$), wobei so ermöglicht wird, eine geschätzte Position des Magneten zu dem Messzeitpunkt ($t_n$) zu erhalten;
> o Wiederholen der Phasen des Messens, des Schätzens, des Berechnens der Verzerrung und des Aktualisierens, auf der Basis des aktualisierten Zustandsvektors, indem der Messzeitpunkt inkrementiert wird;

**dadurch gekennzeichnet, dass** es ferner die folgende Phase aufweist:

> o Identifizieren (60), zu jedem Messzeitpunkt ($t_n$), der Anwesenheit eines magnetischen Störers, der sich von dem Magneten unterscheidet und in der Nähe der Anordnung von Magnetometern angeordnet ist, dass die folgenden Schritte aufweist:
>
>> • Berechnen (61) eines sogenannten Anzeigeparameters ($Ind(t_n)$) aus einem Abweichungsparameter ($e(t_n)$), der in Abhängigkeit von einer Differenz zwischen dem sogenannten geschätzten Magnetfeld ($h(\hat{X})$), das durch den Magneten für den Zustandsvektor, der zu dem vorhergehenden Messzeitpunkt ($\hat{X}(t_{n-1})$) erhalten wird, oder den aktualisierten Zustandsvektor ($\hat{X}(t_n)$) erzeugt wird, auf der Basis des vorbestimmten Modells (h), und dem Nutzmagnetfeld ($B^u(t_n)$) definiert wird, das zu dem Messzeitpunkt ($t_n$) gemessen wird;
>> • Vergleichen (63) der Anzeige ($Ind(t_n)$) mit einem vorbestimmten Schwellenwert ($Ind_{th}$) und Identifizieren der Anwesenheit des magnetischen Störers, wenn mindestens einer der Werte der Anzeige ($Ind(t_n)$) größer als oder gleich dem Schwellenwert ($Ind_{th}$) ist;
>> • Aussenden (64) eines Signals an den Benutzer, das dazu auffordert, den magnetischen Störer gegenüber der Anordnung von Magnetometern so weit zu entfernen, dass die Anzeige ($Ind(t_n)$) größer als oder gleich dem vorbestimmten Schwellenwert ($Ind_{th}$) ist, und Zurückziehen durch den Benutzer des Störers gegenüber der Anordnung von Magnetometern.

**2.** Verfahren nach Anspruch 1, wobei das ausgesendete Signal Informationen aufweist, die die Richtung anzeigen, entlang der der magnetische Störer gegenüber der Anordnung von Magnetometern gelegen ist.

**3.** Verfahren nach Anspruch 1 oder 2, wobei die Anzeige ($Ind_i(t_n)$) für jedes Magnetometer ($M_i$) bestimmt wird und wenn der magnetische Störer in der Nähe der Anordnung von Magnetometern noch vorhanden ist, die Aktualisierungsphase (150; 250) des Zustandsvektors erfolgt, ohne die Messwerte zu berücksichtigen, die von den Magnetometern ($M_i$) stammen, für die die Anzeige ($Ind_i(t_n)$) einen Wert vorweist, der größer als der Schwellenwert ($Ind_{th}$) ist.

**4.** Verfahren nach einem der Ansprüche 1 bis 3, wobei die Anzeige ($Ind(t_n)$) gleich dem Verhältnis des Abweichungsparameters ($e(t_n)$) zu einem Nennterm ist, der mindestens das geschätzte Magnetfeld ($h(\hat{X})$) der Anzeige, das gemessene Nutzmagnetfeld ($B^u(t_n)$) der Anzeige, oder mindestens eine vorbestimmte Konstante ($c$) aufweist, die eine Verzerrung mindestens des einen der Magnetometer darstellt.

**5.** Verfahren nach Anspruch 4, wobei der Nennterm das geschätzte Magnetfeld ($h(\hat{X})$) der Anzeige und die vorbestimmte Konstante ($c$) aufweist.

**6.** Verfahren nach einem der Ansprüche 1 bis 5, wobei die Phasen des Schätzens (130; 230), des Berechnens der Verzerrung (140; 240) und des Aktualisierens (150, 250) durch einen rekursiven Bayesschen Schätzungsalgorithmus erfolgen.

**7.** Verfahren nach Anspruch 6, wobei die Schätzungsphase (130; 230) aufweist:

- einen Schritt des Erhaltens (131; 231) eines vorhergesagten Zustandsvektors zu dem Messzeitpunkt ($t_n$) in Abhängigkeit eines Zustandsvektors ($\hat{X}(t_{n-1} \mid t_{n-1})$), der zu einem vorhergehenden Messzeitpunkt ($t_{n-1}$) erhalten wird, und
- einen Schritt des Berechnens (132; 242) des geschätzten Magnetfelds ($h(\hat{X}(t_{n-1} \mid t_{n-1}))$) für den vorhergesagten Zustandsvektor ($\hat{X}(t_n \mid t_{n-1})$), und

wobei die Phase des Berechnens der Verzerrung (140; 240) aufweist:

- einen Schritt des Berechnens (141; 241) der Verzerrung ($y(t_n)$), genannt Innovation, als Differenz zwischen dem geschätzten Magnetfeld ($h(\hat{X}(t_n \mid t_{n-1}))$) für den vorhergesagten Zustandsvektor ($\hat{X}(t_n \mid t_{n-1})$) und dem gemessenen Nutzmagnetfeld ($B^u(t_n)$).

**8.** Verfahren nach Anspruch 7, wobei der Abweichungsparameter ($e(t_n)$) gleich der Innovation ($y(t_n)$) ist.

**9.** Verfahren nach Anspruch 7, wobei der Abweichungsparameter ($e(t_n)$) gleich der Differenz zwischen einem geschätzten Magnetfeld ($h(\hat{X})$), das durch den Magneten für den aktualisierten Zustandsvektor ($\hat{X}(t_n)$) erzeugt wird, und dem Nutzmagnetfeld ist, das zu dem Messzeitpunkt ($t_n$) gemessen wird.

**10.** Verfahren nach einem der Ansprüche 1 bis 7, wobei die Phasen des Schätzens (130; 230), des Berechnens der Verzerrung (140; 240) und des Aktualisierens (150, 250) durch einen Optimierungsalgorithmus durch iterative Minimierung der Verzerrung, genannt Kostenfunktion, zu dem Messzeitpunkt ($t_n$) erfolgen.

**11.** Verfahren nach einem der Ansprüche 1 bis 10, wobei der Zustandsvektor ferner Variablen aufweist, die ein magnetisches Moment des Magneten darstellen.

**12.** Informationsspeichermedium, das Anweisungen zum Implementieren des Verfahrens nach einem der vorstehenden Ansprüche aufweist, wobei diese Anweisungen geeignet sind, durch einen Prozessor ausgeführt zu werden.

**Claims**

**1.** A method for estimating the position of a magnet (2) by means of a tracking device (1) comprising an array of magnetometers ($M_i$) capable of measuring a magnetic field, the method being implemented by a processor, comprising the following phases:

◦ determining (110; 210) an initial state vector associated with the magnet, for an initial measurement time, the state vector comprising variables representative of the position of the magnet relative to the array of magnetometers;

◦ measuring (120; 220), by means of the array of magnetometers, a useful magnetic field ($B^u(t_n)$), at a measurement time ($t_n$), in the presence of the magnet;

◦ estimating (130; 230) a magnetic field ($h(\hat{X})$) generated by the magnet, as a function of the state vector ($\hat{X}(t_{n-1})$) obtained at a preceding measurement time, based on a predetermined model (h) expressing a relationship between the magnetic field generated by the magnet and the state vector of the magnet;

◦ calculating (140; 240) a bias ($y(t_n)$; $C(t_n)$) by means of the difference between said estimated magnetic field ($h(\hat{X}(t_{n-1}))$) and said measured useful magnetic field ($B^u(t_n)$));

◦ updating (150; 250) the state vector ($\hat{X}(t_n)$) as a function of the calculated bias ($y(t_n)$; $C(t_n)$), thus making it possible to obtain an estimated position of the magnet at the measurement time ($t_n$);

◦ repeating the phases of measuring, estimating, calculating the bias and updating, based on the updated state vector, while incrementing the measurement time;

**characterized in that** the method further comprises the following phase:

◦ identifying (60), at each measurement instant ($t_n$), the presence of a magnetic disturbance separates from the magnet and located in the vicinity of the array of magnetometers, comprising the following steps:

■ calculating (61) an indicator parameter ($Ind(t_n)$) from a deviation parameter ($e(t_n)$) defined as a function of a difference between an estimated magnetic field ($h(\hat{X})$) generated by the magnet for the state vector obtained at the preceding measurement time ($\hat{X}(t_{n-1})$) or the updated state vector ($\hat{X}(t_n)$), based on said-predetermined model (h), and said useful magnetic field ($B^u(t_n)$) measured at the measurement time ($t_n$);

■ comparing (63) the indicator ($Ind(t_n)$) at a predetermined threshold value ($Ind_{th}$), and identifying the presence of the magnetic disturbance when at least one of the values of the indicator ($Ind(tn)$) is greater than or equal to the threshold value ($Ind_{th}$);

■ transmitting (64) a signal to the user, which signal invites the magnetic disturbance to be moved away from the array of magnetometers, as long as the indicator ($Ind(t_n)$) is greater than or equal to the predetermined threshold value ($Ind_{th}$), and the user removing the disturbance from the array of magnetometers.

2. The method according to claim 1, wherein said transmitted signal comprises information indicating the direction in which the magnetic disturbance is located with respect to the array of magnetometers.

3. The method according to claim 1 or 2, wherein the indicator ($Ind_i(t_n)$) is determined for each magnetometer ($M_i$), and, when the magnetic disturbance is still present in the vicinity of the array of magnetometers, the phase of updating (150; 250) the state vector is carried out without taking into consideration the measurement values from the magnetometers ($M_i$) for which the indicator ($Ind_i(t_n)$) has a value greater than the threshold value ($Ind_{th}$).

4. The method according to any of claims 1 to 3, wherein the indicator ($Ind(t_n)$) is equal to the ratio of the deviation parameter ($e(t_n)$) to a denominator term comprising at least the estimated magnetic field ($h(\hat{X})$) of the indicator, the measured useful magnetic field ($B^u(t_n)$) of the indicator, or at least one predetermined constant (c) representative of a bias of at least one of said magnetometers.

5. The method according to claim 4, wherein the denominator term comprises the estimated magnetic field ($h(\hat{X})$) of said indicator and said predetermined constant (c).

6. The method according to any of claims 1 to 5, wherein the phases of estimating (130; 230), calculating the bias (140; 240) and updating (150, 250) are performed by a Bayesian recursive estimation algorithm.

7. The method according to claim 6, wherein the phase of estimating (130; 230) comprises:

- a step of obtaining (131; 231) a predicted state vector at the measurement time ($t_n$) as a function of a state vector ($\hat{X}(t_{n-1} | t_{n-1})$) obtained at a preceding measurement time ($t_{n-1}$), and
- a step of calculating (132; 242) the estimated magnetic field ($h(\hat{X}(t_n | t_{n-1}))$) for the predicted state vector ($\hat{X}(t_n | t_{n-1})$), and

the phase of calculating the bias (140; 240) comprises:

- a step of calculating (141; 241) the bias, referred to as the innovation $(y(t_n))$, as the difference between the estimated magnetic field $(h(\hat{X}(t_n \,|t_{n-1})))$ for the predicted state vector $(\hat{X}(t_n \,|t_{n-1}))$ and said measured useful magnetic field $(B^u(t_n))$.

8. The method according to claim 7, wherein the deviation parameter $(e(t_n))$ is equal to the innovation $(y(t_n))$.

9. The method according to claim 7, wherein the deviation parameter $(e(t_n))$ is equal to the difference between an estimated magnetic field $(h(\hat{X}))$ generated by the magnet for the updated state vector $(\hat{X}(t_n))$, and said useful magnetic field $(B^u(t_n))$ measured at the measurement time $(t_n)$.

10. The method according to any of claims 1 to 7, wherein the phases of estimating (130; 230), calculating the bias (140; 240) and updating (150, 250) are performed by an algorithm for optimization by iterative minimization of the bias, referred to as the cost function, at the measurement time $(t_n)$.

11. The method according to any of claims 1 to 10, wherein the state vector further comprises variables representative of a magnetic moment of the magnet.

12. An information recording medium, comprising instructions for implementing the method according to any of the preceding claims, these instructions being suitable for being executed by a processor.

**Fig.1**

**Fig.2**

**Fig.3**

$$e(t_n) = \left\| y(t_n) \right\| = \left\| B^u(t_n) - h\left( \hat{X}\left( t_n \mid t_{n-1} \right) \right) \right\|$$

61

$$Ind(t_n) \sim \frac{e(t_n)}{\left\| h(\hat{X}) \right\|}$$

62

$$\tilde{Ind}(t_n)$$

63

$$\exists (i) \, / \, \tilde{Ind}_i(t_n) \geq Ind_{th}$$

64

**Fig.4**

**Fig.5A**

**Fig.5B**

**Fig.6A**

$$e(t_n) = \left\| B^u(t_n) - h\left(\hat{X}(t_n \mid t_n)\right) \right\|$$

$Ind(t_n)$

$\tilde{Ind}(t_n)$

$\exists (i) \,/\, \tilde{Ind}_i(t_n) \geq Ind_{th}$

**Fig.6B**

**Fig.7**

$$e(t_n) = \left\| B^u(t_n) - h\left(\hat{X}(t_n)\right) \right\|$$

| 61 |
|:--:|

*Ind(t$_n$)*

| 62 |
|:--:|

$\tilde{I}nd(t_n)$

| 63 |
|:--:|

$\exists(i) / \tilde{I}nd_i(t_n) \geq Ind_{th}$

| 64 |
|:--:|

**Fig.8**

**EP 3 631 647 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014053526 A

- WO 2017060644 A1